# EUROPÄISCHE PATENTSCHRIFT

(11) **EP 2 129 229 B1**
(45) Veröffentlichungstag und Bekanntmachung des Hinweises auf die Patenterteilung: **15.05.2013**
(21) Anmeldenummer: 08716700.3
(22) Anmeldetag: 15.03.2008
(51) Int. Cl.: A22C 17/04, F16G 13/04, F16G 13/08, B30B 9/24

(54) **STÜTZKETTE MIT VERSCHLEISSSCHUTZ FÜR EINE STÜTZVORRICHTUNG IN EINER TRENNEINRICHTUNG ZUM TRENNEN VON STOFFEN UNTERSCHIEDLICHER FLIESSFÄHIGKEIT**
SUPPORT CHAIN WITH WEAR PROTECTION FOR A SUPPORT DEVICE IN A SEPARATION DEVICE FOR SEPARATING SUBSTANCES HAVING DIFFERENT FLOWABILITIES
CHAÎNE SUPPORT COMPORTANT UNE PROTECTION ANTI-USURE POUR UN DISPOSITIF SUPPORT DANS UN DISPOSITIF DE SÉPARATION DESTINÉ À SÉPARER DES SUBSTANCES DE FLUIDITÉS DIFFÉRENTES

(30) Priorität: 23.03.2007 DE 202007004473 U
(43) Veröffentlichungstag der Anmeldung: 09.12.2009
(73) Patentinhaber: Nordischer Maschinenbau Rud. Baader GmbH + Co. KG, 23560 Lübeck (DE)
(72) Erfinder: HAHN, Oliver, Parkville, MO 64152 (US)
(74) Vertreter: Stork Bamberger
(86) Internationale Anmeldenummer: PCT/EP2008/002418
(87) Internationale Veröffentlichungsnummer: WO 2008/116650

(56) Entgegenhaltungen:
- WO-A-2004/043833
- CH-A- 444 028
- DE-A1- 4 037 354
- DE-C1- 4 433 557
- DE-U1-202004 014 365
- GB-A- 308 543

## Beschreibung

Die Erfindung betrifft eine Stützkette für eine Stützvorrichtung zum Stützen eines Pressbandes in einer Trenneinrichtung zum Trennen von Stoffen unterschiedlicher Fließfähigkeit, wobei die Stützkette eine Stahlgelenkkette ist und einzelne miteinander verbundene, eine im Wesentlichen ebene Oberfläche bildende Kettenglieder aufweist, wobei die Kettenglieder aus quer zur Förderrichtung F verlaufenden Kettenstiften mit einer Mehrzahl darauf aufgefädelter Kettenplättchen gebildet sind und die jeweils zwei Kettenstifte miteinander verbindenden Kettenplättchen durch Sicherungsmittel, die an einander gegenüber liegenden freien Enden der Kettenstifte befestigt sind, auf den Kettenstiften gehalten werden.

Solche Stützketten sind z.B. aus Dokument WO 2004/043833 bekannt.

Des Weiteren betrifft die Erfindung eine Stützvorrichtung zum Stützen eines Pressbandes in einer Trenneinrichtung zum Trennen von Stoffen unterschiedlicher Fließfähigkeit, die Trenneinrichtung umfassend ein Gehäuse mit Seitenwänden, eine umlaufend angetriebene Hohltrommel mit perforierter Mantelfläche, ein von außen an diese unter Umschlingung eines Teils des Umfangs der Hohltrommel anpressbares endloses Pressband, einen Produkt-Einzugskeil, Abstreifmittel zum Abstreifen des Pressgutes an der Hohltrommel, wobei das endlose Pressband mittels wenigstens zweier Walzen gelagert ist, von denen eine elastisch gegen die Hohltrommel, getrennt durch das Pressband, andrückbar ist, die Stützvorrichtung umfassend ein als Stützkette ausgebildetes Stützelement.

Die Erfindung betrifft auch eine Trenneinrichtung zum Trennen von Stoffen unterschiedlicher Fließfähigkeit, umfassend ein Gehäuse mit Seitenwänden, eine umlaufend angetriebene Hohltrommel mit perforierter Mantelfläche, ein von außen an diese unter Umschlingung eines Teils des Umfangs der Hohltrommel anpressbares endloses Pressband, einen Produkt-Einzugskeil, Abstreifmittel zum Abstreifen des Pressgutes an der Hohltrommel, wobei das endlose Pressband mittels wenigstens zweier Walzen gelagert ist, von denen eine elastisch gegen die Hohltrommel, getrennt durch das Pressband, andrückbar ist, und eine Stützvorrichtung für das Pressband.

Derartige Trenneinrichtungen, die auch Separatoren genannt und beispielsweise in der DE-A-20 32 774 beschrieben werden, bestehen im Allgemeinen aus Hohltrommeln mit perforierten Mantelflächen, gegen die das Pressgut bzw. Trenngut von außen mittels eines endlosen Pressbandes aus einem elastischen Werkstoff wie etwa Gummi oder Polyurethan oder dergleichen gedrückt wird und hierdurch einen hinreichend großen Druck auf das Pressgut auszuüben vermag. Unter diesem Druck werden die leichter fließenden Bestandteile des Pressgutes durch die Perforation der Mantelfläche in den inneren Hohlraum der rotierenden Hohltrommel gepresst, während die schwerer fließenden Bestandteile des Pressgutes auf der Mantelfläche der Hohltrommel verbleiben, von wo sie mit Hilfe von Abstreifermitteln abgestreift werden.

Einer solchen Trennung zugänglich sind Materialien, die sich durch ihr voneinander abweichendes Fließverhalten unterscheiden. Solche finden sich beispielsweise bei der Verwertung von Tierkörpern (etwa der Abtrennung des Fleisches von Haut, Sehnen, Flechten, Knochen bzw. Gräten), von Obst und Gemüse (beispielsweise der Abtrennung des Fruchtfleisches von Schale, Stielen, Kernen bzw. Steinen), der Aufarbeitung von fehlverpackten Lebensmitteln (etwa der Abtrennung von Butter oder Käse vom Verpackungsmaterial) oder dergleichen.

Aufgrund des Widerstands des zu trennenden Materials, der Elastizität des Pressbandes bzw. Pressgurtes sowie aufgrund von dessen mangelhafter Führung bilden sich im Bereich zwischen Hohltrommel und Pressband häufig so genannte "Produktsäcke" bzw. "Produkttaschen", zumeist im Bereich zwischen dem Produkt-Einzugskeil und der elastisch gegen die Hohltrommel, getrennt durch das Pressband, andrückbaren Walze. Aufgrund dieser Produktsäcke wird das Pressband infolge einer lokalen Dehnung stark beansprucht, wodurch dessen Stabilität mit der Zeit stark abnimmt, da das Pressband ausleiert. Dies hat insgesamt eine Beschädigung des Pressbandes zur Folge, was wiederum häufige Wechsel des Pressbandes erforderlich macht.

Die Ausbildung von Produktsäcken wird durch Verwendung einer Stützvorrichtung verhindert, die das Pressband in einem Teilbereich der Umschlingung der Hohltrommel gegen die Mantelfläche der Hohltrommel presst. Dies bewirkt eine Führung des Pressbandes insbesondere im Bereich vor der Andruckwalze und vermindert so das Auftreten von Produktsäcken.

Eine Trenneinrichtung umfassend eine derartige Stützvorrichtung ist etwa aus der WO 00/35292 bekannt. Bei dieser Stützvorrichtung handelt es sich um einen zusätzlichen Gurt, der durch Andruck des Gurtes an das Pressband im Bereich zwischen dem Produkt-Einzugskeil und der elastisch gegen die Hohltrommel, getrennt durch das Pressband, andrückbaren Walze ein Ausweichen des Pressbandes aufgrund großer Produktstücke bzw. der Ansammlung mehrerer Produktstücke verhindert und auf diese Weise zur Verhinderung des Auftretens von Produktsäcken beiträgt.

Hierbei treten jedoch Nachteile zutage, die einen Einsatz dieser Stützvorrichtung in der Praxis erschweren. So weisen Stützgurte ebenfalls eine gewisse Elastizität auf, weshalb bei Verwendung von derartigen Stützelementen das Entstehen von Produktsäcken nicht vollständig unterbunden werden kann. Darüber hinaus ist es nachteilig, dass die Gurte infolge der hohen mechanischen Belastung beim Andruck an das umlaufende Pressband stark verschleißen, wodurch es von Zeit zu Zeit notwendig ist, die verschlissenen Gurte durch neue Gurte zu ersetzen.

Weiterentwicklungen, die z.B. in dem deutschen Gebrauchsmuster 20 2004 014 365.8 beschrieben sind, sehen als Stützvorrichtung bzw. Stützelement eine Stützkette vor. Mit der Stützkette, die eine hohe mechanische Belastbarkeit aufweist, kann eine permanente und vollständige Unterstützung des Pressbandes erreicht werden. Allerdings ist das zu trennende Gut häufig sehr widerstandsfähig. Diese Widerstandsfähigkeit einerseits und das außermittige Zuführen des Pressgutes in den Einzugskeil andererseits führen dazu, dass die Stützkette seitlich ausweicht. Dabei kommt es häufig zu einer Berührung mit den Seitenwänden, Gehäusewänden oder dergleichen der die Stützkette aufnehmenden Trenneinrichtung. Da sowohl die Seitenwände, Gehäusewände oder dergleichen als auch die Stützkette aus Stahl bestehen, kommt es zu einem punktuellen Verschleiß, der einen Austausch der Stützkette und/oder der Seitenwände, Gehäusewände oder dergleichen erfordert. Dieser Verschleißeffekt tritt insbesondere bei der Verwendung der bisher eingesetzten Stützketten dadurch auf, dass die Kettenstifte an ihren freien Enden im Bereich eines außen liegenden Kettenplättchens vernietet oder durch Schweißen fixiert sind. Mit anderen Worten ist das Sicherungsmittel ein Nietkopf oder ein Schweißpunkt, der verhindert, dass die Kettenplättchen von den Kettenstiften rutschen. Durch die überstehenden Schweißreste bzw. Nietköpfe ist die Stützkette an den zu den Seitenwänden, Gehäusewänden oder dergleichen gerichteten Seiten uneben ausgebildet. Dadurch entsteht ein erheblicher punktueller Verschleiß bei der Berührung Stahl auf Stahl, der einen regelmäßigen Austausch von Teilen der Stützkette oder sogar der gesamten Stützkette erfordert.

Es ist deshalb die Aufgabe der vorliegenden Erfindung, eine verschleißarme und belastbare, hohen Separierdrücken standhaltende Stützkette zu schaffen. Es ist des Weiteren Aufgabe der Erfindung, eine entsprechende Stützvorrichtung und eine entsprechende Trenneinrichtung vorzuschlagen.

Diese Aufgabe wird durch eine Stützkette gemäß Anspruch 1 dadurch gelöst, dass an den einander gegenüber liegenden freien Enden der Kettenstifte Endstücke angeordnet sind, die zur Aufnahme der Sicherungsmittel derart ausgebildet und eingerichtet sind, dass die Stützkette an beiden quer zur Förderrichtung F der Stützkette weisenden Seiten flächig ausgebildet ist. Dadurch wird eine ebene Gleit- und/oder Reibfläche geschaffen, die einerseits die Führung der Stützkette zwischen den Seitenwänden der Trenneinrichtung unterstützt und andererseits den Verschleiß der Stützkette und/oder der Seitenwände reduziert.

Eine zweckmäßige Weiterbildung sieht vor, dass jedes Endstück zwei benachbart angeordnete Kettenstifte miteinander verbindet und aus mindestens einem Gleitelement und zwei Ausgleichselementen gebildet ist, wobei das Gleitelement Ausnehmungen aufweist, die zur vollständigen Aufnahme der Ausgleichselemente und von Befestigungsmitteln ausgebildet sind. Diese Ausführungsform stellt zum einen sicher, dass die Ausgleichselemente und Befestigungsmittel vollständig innerhalb des Gleitelementes versenkt sind, so dass keine störenden Abschnitte über die ebene Außenfläche des Gleitelementes hinaus ragen. Zum anderen verhindern die Ausgleicheselemente eine Verkantung/Verspannung der Kettenglieder, was ebenfalls eine Erhöhung der Standzeit der Stützkette bewirkt.

Vorteilhafterweise ist das Gleitelement mindestens an der nach außen weisenden Fläche gehärtet, wodurch die Verschleißfestigkeit weiter erhöht wird.

Die Aufgabe wird auch durch eine Stützvorrichtung der eingangs genannten Art dadurch gelöst, dass die Stützkette nach einem der Ansprüche 1 bis 9 ausgebildet ist. Die sich daraus ergebenden Vorteile wurden bereits im Zusammenhang mit der erfindungsgemäßen Stützkette erläutert. Zur Vermeidung von Wiederholungen wird auf die entsprechenden Ausführungen verwiesen.

Die Aufgabe wird auch durch eine Trenneinrichtung mit den eingangs genannten Merkmalen gelöst, die sich dadurch auszeichnet, dass die Stützvorrichtung nach Anspruch 10 ausgebildet ist. Hinsichtlich der sich ergebenden Vorteile wird wiederum auf die entsprechenden Passagen zur Stützkette verwiesen.

Weitere zweckmäßige und/oder vorteilhafte Merkmale aus Ausbildungen ergeben sich aus den Unteransprüchen und der Beschreibung. Besonders bevorzugte Ausführungsbeispiele werden anhand der beigefügten Zeichnung näher erläutert. In der Zeichnung zeigt:
- Fig. 1: eine schematische Darstellung einer Trennvorrichtung mit einer Stützkette als Bestandteil einer Stützvorrichtung in Seitenansicht,
- Fig. 2: eine perspektivische Darstellung eines Stützkettenabschnitts mit einem Kettenglied in Explosionsdarstellung,
- Fig. 3: eine Draufsicht auf einen Abschnitt der (nur teilweise dargestellten) Stützkette,
- Fig. 4: eine Vorderansicht eines Ausschnitts der Trenneinrichtung mit zwischen Seitenwänden angeordnetem Quetschband und Stützkette,

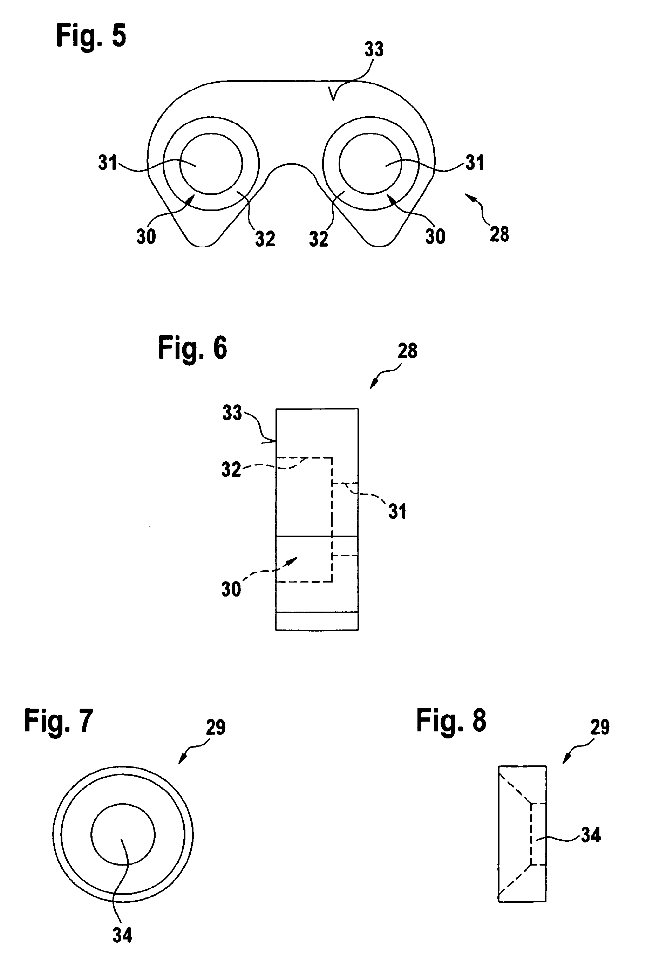

- Fig. 5: eine Draufsicht auf das Gleitelement,
- Fig. 6: eine Seitenansicht des Gleitelementes,
- Fig. 7: eine Draufsicht auf das Ausgleichselement, und
- Fig. 8: eine Seitenansicht des Ausgleichselementes,

Die gezeigte Stützkette dient zum Stützen eines Pressbandes in einer Trenneinrichtung zum Trennen von Stoffen unterschiedlicher Fließfähigkeit. Selbstverständlich kann die Stützkette auch in anderen Bereichen und zu anderen Zwecken eingesetzt werden.

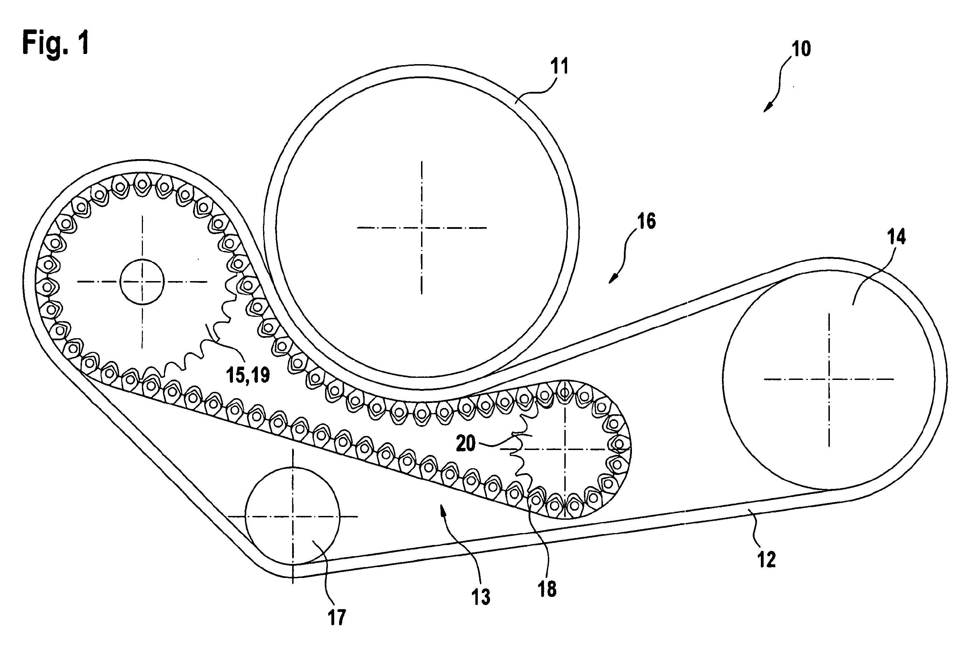

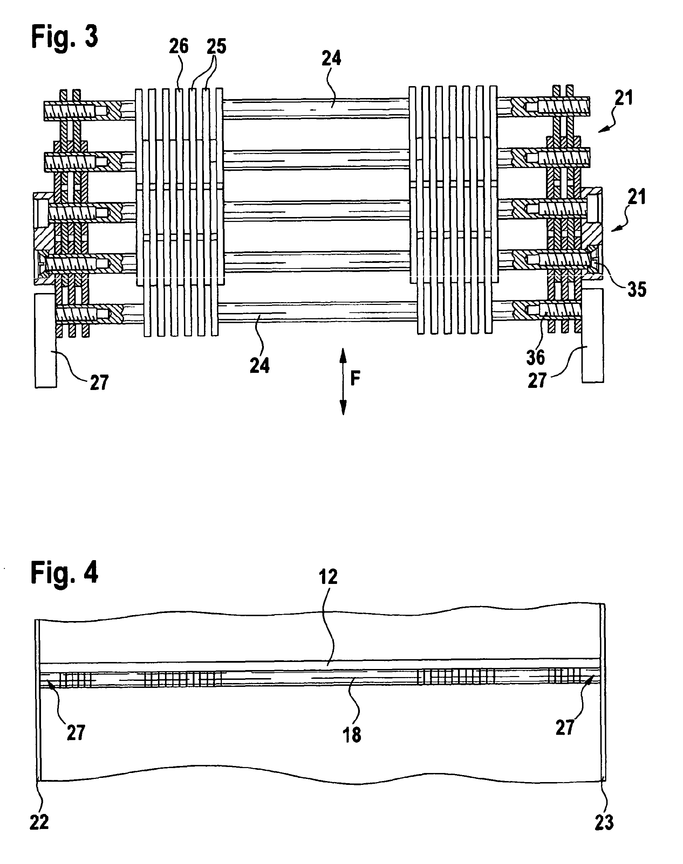

Zum besseren Verständnis der Erfindung wird zunächst anhand der Figur 1 eine Trenneinrichtung 10 beschrieben, in der die erfindungsgemäße und weiter unten im Detail beschriebene Stützkette bevorzugt zum Einsatz kommt. Die dargestellte Trenneinrichtung 10 umfasst eine umlaufend angetriebene Hohltrommel 11, die eine mit Perforationen durchsetzte Mantelfläche aufweist. Die in einem Gestell (in Figur 1 nicht dargestellt; Führungsseitenwände in Figur 1 parallel zur Abbildungsebene in Fig. 1 stehend nicht dargestellt (in Figur 4 Seitenwände 22, 23)) drehbar gelagerte Hohltrommel 11 ist auf einem Teil ihres Umfangs von einem endlosen Quetschband 12 (im Folgenden auch als Pressband bezeichnet) umschlungen, das aus einem elastischen Werkstoff wie beispielsweise Gummi, Polyurethan oder dergleichen besteht, entweder in Form einer einstückigen Bahn oder aber geflochten. Zwecks Vermeidung von Produktsäcken im Bereich der Umschlingung ist zur Abstützung vom Quetschband 12 eine Stützvorrichtung 13 vorgesehen.

Das Pressband 12 ist über Lagerwalzen 14, 15 geführt, von denen die Walze 15 als angetriebene Andruckwalze ausgebildet ist, mit deren Hilfe das Pressband 12 gegen die Hohltrommel 11 anpressbar ist. Die Walze 14 ist als Spannwalze ausgeführt und derart angeordnet, dass das Pressband 12 mit der Hohltrommel 11 einen Produkt-Einzugskeil 16 bildet. Eine Führungswalze 17 dient als Umlenkwalze und Abstandhalter, um die jeweils rücklaufenden Abschnitte des Pressbandes 12 und der Stützvorrichtung 13 voneinander zu beabstanden. Im oberen Bereich der Peripherie der Hohltrommel 11 befinden sich Abstreifmittel (nicht dargestellt) umfassend eine Abstreifklinge, die mit der äußeren Mantelfläche der Hohltrommel 11 in Wirkverbindung steht.

Die Stützvorrichtung 13 bzw. das Stützelement ist hier als eine Stützkette 18 ausgebildet, die von Lagerwalzen 19, 20 gehalten wird, wobei die Walze 19 als Antriebswalze ausgeführt ist und die Walze 20 eine Spannwalze ist, mit deren Hilfe die Andruckkraft einstellbar ist, die die Stützkette 18 auf das Pressband 12 ausübt. Besonders günstig ist es hierbei, wenn die Walze 20 mit der Walze 19 in einer derartigen Wirkverbindung steht, dass die Andruckkraft der Stützkette 18 an das Pressband 12 durch Bewegen der Walze 20 nachgeregelt wird, etwa unter Verwendung eines hydraulischen Systems oder einer bzw. mehrerer Federn. Hierdurch ist es möglich, dass, sobald beispielsweise die Walze 20 infolge des mechanischen Widerstands des Pressgutes von der Hohltrommel 11 abgedrückt wird, die Walze 19 in einer auf die Hohltrommel 11 gerichteten Bewegung nachgefahren wird, wodurch die Andruckkraft der Stützkette 18 an das Pressband 12 insgesamt konstant bleibt. Die Walze 15 dient in dieser Ausführungsform sowohl dem Pressband 12 als auch der Stützkette 18 als Antriebswalze und ist daher mit der Walze 19 identisch. Eine derartige doppelte Funktion wird dadurch erzielt, dass die Walze 15 bzw. 19 als geradverzahntes Stirnrad ausgebildet ist, genauer, als Zahnwalze, deren Verzahnungen formschlüssig in die Stützkette 18 eingreifen. Somit wird ein effizienter Antrieb für die Umlaufbewegung der Stützkette 18 bereitgestellt. Der synchrone Umlauf des Pressbandes 12 und der Stützkette 18 innerhalb des Umschlingungsbereichs wird dadurch erzielt, dass das Pressband 12 bei der Walze 15, 19 eng an der nach außen gerichteten Seite der Stützkette 18 anliegt, wodurch das Pressband 12 und die Stützkette 18 allein aufgrund von Haftreibung mit derselben Umfangsgeschwindigkeit angetrieben werden und daher im Bereich der Umschlingung gleich schnell umlaufen.

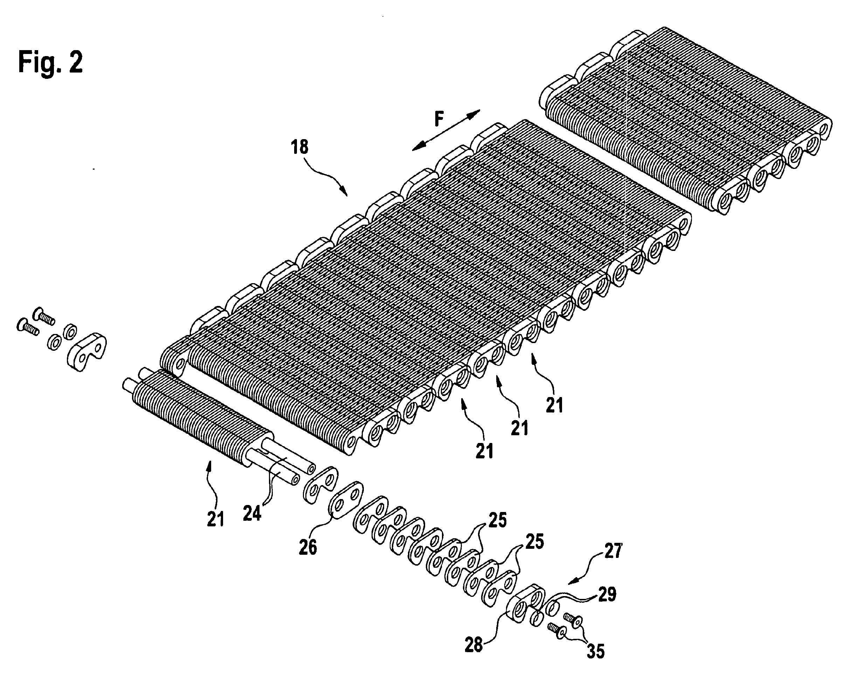

Die Stützkette 18, die in Ausschnitten in der Figur 2 dargestellt ist, ist als Stahlgelenkkette, vorzugsweise aus Chrom-Nickel (CrNi), ausgebildet und besteht aus einer Vielzahl gelenkig miteinander verbundener Kettenglieder 21, wobei ein Kettenglied 21 schematisch und beispielhaft in Explosionsdarstellung in Figur 2 gezeigt ist. Viele nebeneinander angeordnete Kettenglieder 21 bilden eine im Wesentlichen ebene Oberfläche. "Eben" bedeutet dabei nicht zwangsläufig vollständig geschlossen. "Eben" schließt auch eine Oberfläche ein, die bedingt durch die verschachtelte Anordnung der Kettenglieder 21 kleinere Zwischenräume aufweist. In jedem Fall ist die Oberfläche der Stützkette 18 zur flächigen Anlage am Quetschband bzw. Pressband 12 geeignet (siehe auch Figur 4).

Die Kettenglieder 21 sind aus quer zur Förderrichtung F verlaufenden Kettenstiften 24 mit einer Mehrzahl darauf angeordneter bzw. aufgefädelter Kettenplättchen 25 gebildet. Die Kettenstifte 24 bestehen bevorzugt aus einem elastischen und härtbaren CrNi-Stahl. Die Kettenplättchen 25 sind ebenfalls aus einen mindestens Oberflächen gehärteten oder durchgehärteten CrNi-Stahl hergestellt. Dabei sind die Kettenplättchen 25 verschachtelt auf den Kettenstiften 24 derart angeordnet, dass eine Verbindung zu den benachbarten Kettengliedern 21 hergestellt ist. Jedes Kettenglied 21 weist mindestens ein, vorzugsweise zwei Führungsplättchen 26 auf, die in gleicher Weise wie die Kettenplättchen 25 auf die Kettenstifte 24 aufgefädelt sind. Die Führungsplättchen 26 bestehen ebenfalls aus einem elastischen und härtbaren CrNi-Stahl. An den freien und einander gegenüber liegenden Enden der Kettenstifte 24 sind Sicherungsmittel, die weiter unten detaillierter beschrieben werden, angeordnet, die verhindern, dass die Kettenplättchen 25 und Führungsplättchen 26 von den Kettenstiften 24 rutschen. Anders ausgedrückt sind die Sicherungsmittel an den Kettenstiften 24 befestigt, um die Kettenplättchen 25 und die Führungsplättchen 26 auf den Kettenstiften 24 zu halten.

Weiterhin sind den freien Enden der Kettenstifte 24 Endstücke 27 zugeordnet. Diese Endstücke 27, die vorzugsweise zwei benachbarte Kettenstifte 24 eines Kettenglieds 21 miteinander verbinden, sind zur Aufnahme der Sicherungsmittel derart ausgebildet und angeordnet, dass die Stützkette 18 an beiden quer zur Förderrichtung F der Stützkette 18 weisenden Seiten flächig ausgebildet ist. Die Endstücke 27 bilden einen den Seitenwänden 22, 23 zugewandten flächigen Abschluss der Stützkette 18, und zwar unabhängig von der Ausbildung der Sicherungsmittel. In der beschriebenen Ausführungsform ist jedes Endstück 27 aus einem Gleitelement 28 und zwei Ausgleichselementen 29 gebildet. Auf die Ausgleichselemente 29 kann optional aber auch verzichtet werden. Das Gleitelement 28 weist Ausnehmungen 30 auf, die zur vollständigen Aufnahme der Ausgleichselemente 29 sowie der Sicherungsmittel ausgebildet sind. Jedes Gleitelement 28 weist zwei Ausnehmungen 30 auf. Die Ausnehmungen 30 sind zum einen durch eine Durchgangsbohrung 31 sowie zum anderen durch eine nicht durchgängige Bohrung 32 ausgebildet, wobei der Durchmesser der Bohrung 32 größer als der Durchmesser der Durchgangsbohrung 31 ist. Natürlich können die Ausnehmungen 30 auch jede andere übliche Form und Gestalt aufweisen. Auch kann das Gleitelement 28 mehr als zwei dieser Ausnehmungen 30 aufweisen. Das Gleitelement 28 ist vorzugsweise aus CrNi-Stahl hergestellt, wobei das Gleitelement 28 mindestens an der nach außen weisenden Oberfläche 33 gehärtet ist. Das Gleitelement 28 kann auch durchgehärtet sein und ist auf der nach außen weisenden Oberfläche 33 glattflächig und eben ausgebildet. Alternativ kann das Gleitelement 28 auch mit einer Kunststoffbeschichtung auf der nach außen weisenden Seite versehen sein. Eine vollständige Ausbildung des Gleitelementes 28 aus Kunststoff ist ebenfalls einsetzbar. Selbst Kombinationen aus den genannten Ausbildungsformen sind möglich.

Die dem Gleitelement 28 zuzuordnenden bzw. zugeordneten Ausgleichselemente 29 weisen jeweils eine Durchgangsbohrung 34 zur Aufnahme der Sicherungsmittel auf. Die Durchgangsbohrung 34 ist als Senkkopfbohrung ausgebildet und weitet sich somit nach außen hin auf. Das Ausgleichselement 29 besteht üblicherweise aus CrNi-Stahl. Andere Materialien sowie Ausbildungen und Ausformungen des Ausgleichselementes 29 sind ebenfalls möglich.

Als Sicherungsmittel wird bevorzugt eine Schraube 35 verwendet. Die Schraube 35, die als Senkkopfschraube ausgebildet ist, ist lösbar jeweils an einem Kettenstift 24 befestigt, wobei die Schraube 35 durch die Durchgangsbohrung 34 des Ausgleichselementes 29 gesteckt ist. Die Schraube 35 korrespondiert zu einem in den Kettenstiften 24 ausgebildeten Gewinde 36. Dazu ragt der Kettenstift 24 durch die Durchgangsbohrung 31 bzw. liegt in dieser. Das Ausgleichselement 29 weist einen Außendurchmesser auf, der geringfügig kleiner ist als der Innendurchmesser der Bohrung 32, so dass Ausgleichsbewegungen innerhalb der Ausnehmung 30 möglich sind.

Alternativ zu der beschriebenen Schraubverbindung, die einen einfachen Austausch der Endstücke 27 oder Teilen davon ermöglicht, kann das Sicherungsmittel auch ein Nietkopf, ein Blindniet oder eine Schweißverbindung sein. Bei allen Verbindungen wird nur das Ausgleichselement 29 direkt und unmittelbar an den Kettenstiften 24 befestigt. Das Gleitelement 28 ist wegen des etwas größeren Durchmessers der Durchgangsbohrung 31 gegenüber dem Durchmesser der Kettenstifte 24 in der Lage, eine Schrägstellung der Stützkette 18 auszugleichen, um stets einen vollflächigen Kontakt der Gleitelemente 28 zu den Seitenwänden 22, 23 zu gewährleisten. Die Endstücke 27 haben in erster Linie eine Führungs- und Schutzfunktion zur Bildung einer glatten und flächigen Außenfläche der Stützkette 18.

Die Stützkette 18 ist vorliegend eine Gelenkkette aus Stahl, die geringfügig schmaler als die Breite des Pressbandes 12 ist, so dass sie das Pressband 12 nahezu über dessen gesamte Breite unterstützt (siehe insbesondere Figur 4). Das Pressband 12 selbst weist vorzugsweise eine Breite auf, die mindestens dem Abstand der Seitenwände 22, 23 entspricht, so dass es eng an den Seitenwänden 22, 23 anliegt. Dadurch wird der Produktraum quasi abgedichtet. Der Abstand der Stützkette 18 zu den Seitenwänden 22, 23 ist allerdings gering, um einerseits das Pressband 12 maximal zu unterstützen und andererseits ein Ausweichen der Stützkette 18 zu verhindern.

Die Stützkette 18 kann selbstverständlich aus unterschiedlichen Materialien wie etwa Polymeren, Metallen/Legierungen oder dergleichen gefertigt sein. Die Wahl des Materials bestimmt sich nach der erforderlichen Gesamtstabilität der Stützkette 18, die wiederum von der beabsichtigten Andruckkraft des Pressbandes 12 an die Hohltrommel 11 abhängt. Letztere Kraft bestimmt sich unter anderem nach der Art und Widerstandsfähigkeit des zu trennenden Pressgutes und der Umlaufgeschwindigkeit des Pressbandes 12.

## Patentansprüche

1. Stützkette (18) für eine Stützvorrichtung (13) zum Stützen eines Pressbandes (12) in einer Trenneinrichtung (10) zum Trennen von Stoffen unterschiedlicher Fließfähigkeit, wobei die Stützkette (18) eine Stahlgelenkkette ist und einzelne miteinander verbundene, eine im Wesentlichen ebene Oberfläche bildende Kettenglieder (21) aufweist, wobei die Kettenglieder (21) aus quer zur Förderrichtung F verlaufenden Kettenstiften (24) mit einer Mehrzahl darauf aufgefädelter Kettenplättchen (25) gebildet sind und die jeweils zwei Kettenstifte (24) miteinander verbindenden Kettenplättchen (25) durch Sicherungsmittel, die an einander gegenüber liegenden freien Enden der Kettenstifte (24) befestigt sind, auf den Kettenstiften (24) gehalten werden, **dadurch gekennzeichnet, dass** an den einander gegenüber liegenden freien Enden der Kettenstifte (24) Endstücke (27) angeordnet sind, die zur Aufnahme der Sicherungsmittel derart ausgebildet und eingerichtet sind, dass die Stützkette (18) an beiden quer zur Förderrichtung F der Stützkette (18) weisenden Seiten flächig ausgebildet ist, wobei jedes Endstück (27) zwei benachbart angeordnete Kettenstifte (24) miteinander verbindet und aus mindestens einem Gleitelement (28) und zwei Ausgleichselementen (29) gebildet ist, wobei das Gleitelement (28) Ausnehmungen (30), die aus zwei Durchgangsbohrungen (31) zur Aufnahme der Kettenstifte (24) sowie zwei Bohrungen (32) zur Aufnahme der Ausgleichselemente (29) gebildet sind, aufweist, wobei die Ausnehmungen (30) zur vollständigen Aufnahme der Ausgleichselemente (29) und der Sicherungsmittel ausgebildet sind.

2. Stützkette nach Anspruch 1, **dadurch gekennzeichnet, dass** der Durchmesser der Durchgangsbohrungen (31) geringfügig größer ist als der Außendurchmesser der Kettenstifte (24).

3. Stützkette nach Anspruch 1 oder 2, **dadurch gekennzeichnet, dass** das Gleitelement (28) an der nach außen weisenden Seite glattflächig und eben ausgebildet ist.

4. Stützkette nach einem der Ansprüche 1 bis 3, **dadurch gekennzeichnet, dass** das Gleitelement (28) mindestens an der nach außen weisenden Seite gehärtet ist.

5. Stützkette nach einem der Ansprüche 1 bis 4, **dadurch gekennzeichnet, dass** das Gleitelement (28) mindestens auf der nach außen weisenden Seite mit Kunststoff beschichtet ist oder vollständig aus Kunststoff besteht.

6. Stützkette nach einem der Ansprüche 1 bis 5, **dadurch gekennzeichnet, dass** jedes Ausgleichselement (29) eine Durchgangsbohrung (34) zur Aufnahme der Sicherungsmittel aufweist.

7. Stützkette nach einem der Ansprüche 1 bis 6, **dadurch gekennzeichnet, dass** das Sicherungsmittel eine Schraube (35) ist, die lösbar an dem korrespondierend ausgebildeten Kettenstift (24) befestigt ist.

8. Stützkette nach einem der Ansprüche 1 bis 6, **dadurch gekennzeichnet, dass** das Sicherungsmittel ein Nietkopf ist, der aus dem Kettenstift (24) gebildet wird.

9. Stützkette nach einem der Ansprüche 1 bis 6, **dadurch gekennzeichnet, dass** das Sicherungsmittel eine Schweißverbindung zum Kettenstift (24) ist.

10. Stützvorrichtung (13) zum Stützen eines Pressbandes (12) in einer Trenneinrichtung (10) zum Trennen von Stoffen unterschiedlicher Fließfähigkeit, die Trenneinrichtung (10) umfassend ein Gehäuse mit Seitenwänden (22, 23), eine umlaufend angetriebene Hohltrommel (11) mit perforierter Mantelfläche, ein von außen an diese unter Umschlingung eines Teils des Umfangs der Hohltrommel (11) anpressbares endloses Pressband (12), einen Produkt-Einzugskeil (16), Abstreifmittel zum Abstreifen des Pressgutes an der Hohltrommel (11), wobei das endlose Pressband (12) mittels wenigstens zweier Walzen (14, 15) gelagert ist, von denen eine elastisch gegen die Hohltrommel (11), getrennt durch das Pressband (12), andrückbar ist, die Stützvorrichtung (13) umfassend ein als Stützkette (18) ausgebildetes Stützelement, **dadurch gekennzeichnet, dass** die Stützkette (18) nach einem der Ansprüche 1 bis 9 ausgebildet ist.

11. Trenneinrichtung (10) zum Trennen von Stoffen unterschiedlicher Fließfähigkeit, umfassend ein Gehäuse mit Seitenwänden (22, 23), eine umlaufend angetriebene Hohltrommel (11) mit perforierter Mantelfläche, ein von außen an diese unter Umschlingung eines Teils des Umfangs der Hohltrommel (11) anpressbares endloses Pressband (12), einen Produkt-Einzugskeil (16), Abstreifmittel zum Abstreifen des Pressgutes an der Hohltrommel (11), wobei das endlose Pressband (12) mittels wenigstens zweier Walzen (14, 15) gelagert ist, von denen eine elastisch gegen die Hohltrommel (11), getrennt durch das Pressband (12), andrückbar ist, und eine Stützvorrichtung (13) für das Pressband (12), **dadurch gekennzeichnet, dass** die Stützvorrichtung (13) nach Anspruch 10 ausgebildet ist.

## Claims

1. Support chain (18) for a support device (13) for supporting a compression belt (12) in a separation device (10) for separating substances having different flowability, wherein the support chain (18) is an articulated steel chain and comprises individual chain links (21) connected to each other and forming a substantially flat surface, wherein the chain links (21) are composed of chain pins (24) directed transversely to the direction of conveying F and having a plurality of chain plates (25) threaded thereon, and the chain plates (25) connecting two chain pins (24) each together are held on the chain pins (24) by locking means which are attached to opposite free ends of the chain pins (24), **characterised in that** at the opposite free ends of the chain pins (24) are arranged end pieces (27) which are constructed and designed to receive the locking means in such a way that the support chain (18) is planar on both sides facing transversely to the direction of conveying F of the support chain (18), wherein each end piece (27) connects two adjacent chain pins (24) to each other and is composed of at least one sliding element (28) and two compensating elements (29), wherein the sliding element (28) has recesses (30) which are composed of two through-bores (31) for receiving the chain pins (24) and two bores (32) for receiving the compensating elements (29), wherein the recesses (30) are designed to completely receive the compensating elements (29) and locking means.

2. Support chain according to claim 1, **characterised in that** the diameter of the through-bores (31) is slightly larger than the outside diameter of the chain pins (24).

3. Support chain according to claim 1 or 2, **characterised in that** the sliding element (28) is smooth and flat on the outwardly facing side.

4. Support chain according to any one of claims 1 to 3, **characterised in that** the sliding element (28) is hardened at least on the outwardly facing side.

5. Support chain according to any one of claims 1 to 4, **characterised in that** the sliding element (28) is coated with plastic at least on the outwardly facing side or is made completely of plastic.

6. Support chain according to any one of claims 1 to 5, **characterised in that** each compensating element (29) has a through-bore (34) for receiving the locking means.

7. Support chain according to any one of claims 1 to 6, **characterised in that** the locking means is a screw (35) which is releasably attached to the correspondingly shaped chain pin (24).

8. Support chain according to any one of claims 1 to 6, **characterised in that** the locking means is a rivet head which is formed from the chain pin (24).

9. Support chain according to any one of claims 1 to 6, **characterised in that** the locking means is a welded joint to the chain pin (24).

10. Support device (13) for supporting a compression belt (12) in a separation device (10) for separating substances having different flowability, the separation device (10) comprising a housing with side walls (22, 23), a rotationally driven hollow drum (11) with perforated shell, an endless compression belt (12) that can be pressed against the latter from the outside, wrapping round part of the circumference of the hollow drum (11), a product nip (16), stripping means for stripping the compressed material off the hollow drum (11), wherein the endless compression belt (12) is mounted by means of at least two rollers (14, 15), one of which can be pressed elastically against the hollow drum (11), separated by the compression belt (12), the support device (13) comprising a support element designed as a support chain (18), **characterised in that** the support chain (18) is designed according to any one of claims 1 to 9.

11. Separation device (10) for separating substances having different flowability, comprising a housing with side walls (22, 23), a rotationally driven hollow drum (11) with perforated shell, an endless compression belt (12) that can be pressed against the latter from the outside, wrapping round part of the circumference of the hollow drum (11), a product nip (16), stripping means for stripping the compressed material off the hollow drum (11), wherein the endless compression belt (12) is mounted by means of at least two rollers (14, 15), one of which can be pressed elastically against the hollow drum (11), separated by the compression belt (12), and a support device (13) for the compression belt (12), **characterised in that** the support device (13) is designed according to claim 10.

## Revendications

1. Chaîne support (18) pour un dispositif support (13) destiné à supporter une courroie de presse (12) dans un dispositif de séparation (10) destiné à séparer des substances de fluidités différentes, la chaîne support (18) étant une chaîne articulée en acier et présentant des maillons (21) reliés les uns aux autres et formant une surface essentiellement plane, les maillons (21) étant formés par des broches (24) s'étendant perpendiculairement au sens de transport F, pourvues d'une pluralité de plaquettes (25) enfilées sur les broches et les plaquettes (25) connectant respectivement deux broches (24) étant maintenues sur les broches (24) au moyen d'éléments de fixation fixés sur des extrémités libres des broches, se faisant face,
**caractérisée en ce que** les extrémités libres des broches (24), se faisant face, comportent des pièces terminales (27) conçues et disposées pour la réception des éléments de fixation de telle manière que la chaîne support (18) est conçue de façon plane sur les deux côtés orientés perpendiculairement au sens de transport F de la chaîne support (18), chaque pièce terminale (27) connectant deux broches (24) disposées l'une à côté de l'autre et étant constituée d'au moins un élément glissant (28) et deux éléments de compensation (29), l'élément glissant (28) présentant des évidements (30) qui sont constitués de deux trous traversants (31) destinés à recevoir les broches (24) ainsi que de deux trous (32) destinés à recevoir les éléments de compensation (29), les évidements (30) étant conçus pour recevoir entièrement les éléments de compensation (29) et les éléments de fixation.

2. Chaîne support selon la revendication 1, **caractérisée en ce que** le diamètre des trous traversants (31) est légèrement supérieur au diamètre extérieur des broches (24).

3. Chaîne support selon les revendications 1 ou 2, **caractérisée en ce que** l'élément glissant (28) est conçu de façon plane et régulière sur le côté orienté vers l'extérieur.

4. Chaîne support selon l'une des revendications 1 à 3, **caractérisée en ce que** l'élément glissant (28) est durci au moins sur le côté orienté vers l'extérieur.

5. Chaîne support selon l'une des revendications 1 à 4, **caractérisée en ce que** l'élément glissant (28) est plastifié au moins sur le côté orienté vers l'extérieur ou est entièrement constitué de matière plastique.

6. Chaîne support selon l'une des revendications 1 à 5, **caractérisée en ce que** chaque élément de compensation (29) présente un trou traversant (34) destiné à recevoir les éléments de fixation.

7. Chaîne support selon l'une des revendications 1 à 6, **caractérisée en ce que** l'élément de fixation est une vis (35) qui est fixée de manière amovible à la broche (24) conçue de façon correspondante.

8. Chaîne support selon l'une des revendications 1 à 6, **caractérisée en ce que** l'élément de fixation est une tête de rivet qui est formée par la broche (24).

9. Chaîne support selon l'une des revendications 1 à 6, **caractérisée en ce que** l'élément de fixation est une liaison par soudure avec la broche (24).

10. dispositif support (13) destiné à supporter une courroie de presse (12) dans un dispositif de séparation (10) destiné à séparer des substances de fluidités différentes, comprenant un boîtier pourvu de parois latérales (22, 23), un tambour creux (11) entraîné en rotation pourvu d'une surface externe perforée, une courroie de presse sans fin (12) pouvant être pressée de l'extérieur sur celle-ci par enveloppement d'une partie de la circonférence du tambour creux (11), un coin d'entrée de produit (16), un moyen de raclage pour le raclage du produit pressé sur le tambour creux (11), la courroie de presse sans fin (12) étant déplacée par au moins deux cylindres (14,15) dont l'un peut être appuyé élastiquement contre le tambour creux (11), étant séparés par la courroie de presse (12), le dispositif support (13) comprenant un élément support conçu comme une chaîne support (18), **caractérisé en ce que** la chaîne support (18) est conçue selon l'une des revendications 1 à 9.

11. Dispositif de séparation (10) destiné à séparer des substances de fluidités différentes, comprenant un boîtier pourvu de parois latérales (22, 23), un tambour creux (11) entraîné en rotation pourvu d'une surface externe perforée, une courroie de presse sans fin (12) pouvant être pressée de l'extérieur sur celle-ci par enveloppement d'une partie de la circonférence du tambour creux (11), un coin d'entrée de produit (16), un moyen de raclage pour le raclage du produit pressé sur le tambour creux (11), la courroie de presse sans fin (12) étant déplacée par au moins deux cylindres (14,15) dont l'un peut être appuyé élastiquement contre le tambour creux (11), étant séparés par la courroie de presse (12), et un dispositif support (13) pour la courroie de presse (12) **caractérisé en ce que** le dispositif support (13) est conçu selon la revendication 10.
